# EUROPÄISCHE PATENTSCHRIFT

(11) **EP 0 685 097 B1**
(45) Veröffentlichungstag und Bekanntmachung des Hinweises auf die Patenterteilung: **27.11.1996**
(21) Anmeldenummer: 94905092.6
(22) Anmeldetag: 20.01.1994
(51) Int. Cl.: G09B 25/02, G09B 23/18

(54) **FÜR DEMONSTRATIONS- UND/ODER SCHULUNGSZWECKE VERWENDBARES FUNKTIONSELEMENT**
FUNCTIONAL COMPONENT USABLE FOR DEMONSTRATION AND/OR TRAINING PURPOSES
ELEMENT FONCTIONNEL UTILISABLE POUR LA DEMONSTRATION ET/OU L'ENSEIGNEMENT

(30) Priorität: 18.02.1993 DE 9302386 U
(43) Veröffentlichungstag der Anmeldung: 06.12.1995
(73) Patentinhaber: Festo KG, D-73734 Esslingen (DE)
(72) Erfinder: KUTSCHER, Erwin, D-73061 Ebersbach (DE)
(74) Vertreter: Abel, Martin, Dipl.-Ing.
(86) Internationale Anmeldenummer: EP9400130
(87) Internationale Veröffentlichungsnummer: WO9419786

(56) Entgegenhaltungen:
- EP-A- 0 522 633
- GB-A- 2 151 387
- GB-A- 2 176 661
- US-A- 4 826 438

## Beschreibung

Die Erfindung betrifft ein für Demonstrations- und/oder Schulungszwecke verwendbares Funktionselement gemäß dem Oberbegriff des Ansprüches 1.

Um das Verständnis einzelner Bauelemente oder auch ganzer Schaltungen zu erleichtern, ist es insbesondere auf den Gebieten der Pneumatik, Hydraulik und Elektronik üblich, praktische Aufbauten heranzuziehen. Im Falle der aus der DE-GM 75 07 762 bekannten Anordnung wird ein plattenartiges Tragteil verwendet, das eine Vielzahl von in einem Raster angeordneten Bohrungen aufweist, in die sich die einzelnen Funktionselemente einstecken lassen. Jedes Funktionselement enthält eine pneumatische, hydraulische, elektrische oder elektronische Ausrüstung, beispielsweise Ventile, Arbeitszylinder, Manometer, Anschlußstutzen für elektrische oder pneumatische Leitungen, elektronische Steuerungen usw.

Die Funktionselemente können einem Schaltplan gemäß montiert und anschließend in der erforderlichen Weise fluidisch und/oder elektrisch miteinander verknüpft werden.

Eine Anordnung der eingangs genannten Art geht aus der GB-A-2 151 387 hervor. Diese umfaßt ein plattenartiges Tragteil mit mehreren Befestigungsvertiefungen, in denen mit Funktionseinheiten ausgestattete Funktionselemente verankerbar sind. Die Funktionselemente besitzen einen Grundkörper mit zwei federnden Schenkeln, die in die Befestigungsvertiefungen klemmend einrastbar sind. Zum Entfernen von dem Tragteil muß einer der Schenkel manuell zur Seite gebogen werden.

Bei dem bekannten Funktionselement ist die Handhabung insofern problematisch, als bei seiner Befestigung an dem Tragteil Kompromisse einzugehen sind. Eine guten Halt versprechende hohe Vorspannung läßt sich wegen der dann für die Montage und Demontage erforderlichen hohen Biegekräfte kaum verwirklichen. Bei reduzierter Vorspannung hingegen kann die Stabilität leiden.

Es ist die Aufgabe der vorliegenden Erfindung, ein Funktionselement der eingangs genannten Art zu schaffen, das bei einfacher Handhabung einen flexibleren Aufbau vorzuführender Anordnungen gestattet.

Diese Aufgabe wird gelöst durch die kennzeichnenden Merkmale des Ansprüches 1.

Das Funktionselement ist nun so ausgelegt, daß es an einem mit mindestens einer nutartigen Befestigungsvertiefung ausgestatteten Tragteil sicher lösbar festlegbar ist. Tragteile dieser Art sind als solche bekannt, beispielsweise aus der DE-OS 40 10 840. Es kann sich dabei um ein stranggepreßtes plattenartiges Bauteil handeln, das mit mehreren linearen, parallel und mit insbesondere gleichem Abstand nebeneinander verlaufenden Befestigungsvertiefungen ausgestattet ist, wobei das Funktionselement sich in einer beliebigen der vorhandenen Befestigungsvertiefungen lösbar verankern läßt. Als Befestigungseinrichtung des erfindungsgemäßen Funktionselements ist eine Klemmeinrichtung vorgesehen, die ein nach unten vorspringendes Klemmteil aufweist, das bei in Montagestellung befindlichem Funktionselement in die ausgewählte Befestigungsvertiefung eingreift. In seiner Klemmstellung wird das Klemmteil gegen die Oberfläche der Befestigungsvertiefung gedrückt, so daß das Funktionselement praktisch festgespannt ist. Zum Entfernen ist lediglich auf das Betätigungselement einzuwirken, so daß das Klemmteil die Lösestellung einnimmt, in der sich das Funktionselement problemlos vom Tragteil abheben läßt. Ein Werkzeug wird nicht benötigt, die Kraft der menschlichen Hand reicht zur Betätigung aus. Auch während des Anbringens am Tragteil wird das Klemmteil mittels des Betätigungselements zweckmäßigerweise in der Lösestellung gehalten. Bei entsprechender Ausgestaltung kann aber auch vorgesehen sein, daß das Klemmteil normalerweise die Klemmstellung einnimmt und beim Einsetzen in die Befestigungsvertiefung selbsttätig kurzzeitig in Richtung der Lösestellung bewegt wird und somit praktisch selbsttätig einrastet.

Das Funktionselement läßt sich stufenlos in jeder beiliebigen Position entlang der jeweiligen Befestigungsvertiefung anordnen und festklemmen. Man kann die Anordnung sogar so treffen, daß trotz Einnahme der Klemmstellung bei einer gewissen Krafteinwirkung eine Längsverschiebung in der Befestigungsvertiefung verursacht werden kann, um Feinjustierungen vorzunehmen. Auch komplexe Schaltungen lassen sich mit den erfindungsgemäßen Funktionselementen äußerst kompakt und platzsparend auf einem Tragteil installieren.

Ist eine Hebelübersetzung vorgesehen, lassen sich hohe Klemmkräfte erzeugen und gleichwohl die Verstellkräfte zugunsten einer einfachen Handhabung gering halten.

Vorteilhafte Weiterbildungen der Erfindung sind in den Unteransprüchen aufgeführt.

Ein gemeinsam mit dem Klemmteil in eine gemeinsame Befestigungsvertiefung eingreifendes Abstützteil ermöglicht kompakte Abmessungen, wobei der auf der Tragplatte aufsitzende Grundkörper die Stabilität fördert.

Ein besonders sicherer Halt stellt sich ein, wenn das Klemmteil in der Klemmstellung einen Haltevorsprung der Befestigungsvertiefung mit einem Verankerungsvorsprung hintergreift. Von Vorteil ist dies insbesondere, wenn die Montagefläche geneigt zur Horizontalen oder gar vertikal ausgerichtet ist.

Das Abstützteil ist bevorzugt starr an dem Grundkörper angeordnet, bezüglich dessen das Klemmteil beweglich ist. Es kann auch zur Zentrierung dienen, indem es bei Montagestellung an beiden Vertiefungsflanken praktisch gleichzeitig anliegt und dadurch die Querposition des Funktionselements bezüglich des Tragteils unverrückbar festlegt.

Nachfolgend wird die Erfindung anhand der beiliegenden Zeichnung näher erläutert. Es zeigen im einzelnen:
- Fig. 1: mehrere in Montagestellung an einem Tragteil befestigte Funktionselemente in schematischer Darstellung in Draufsicht auf die Montagefläche des Tragteils gesehen,
- Fig. 2: ein in Montagestellung befindliches Funktionselement in perspektivischer Darstellung, wobei die üblicherweise vorhandene Funktionseinheit des Funktionselements entfernt ist, um die Ansicht der Klemmeinrichtung zu verbessern und wobei das Tragteil nur ausschnittsweise abgebildet ist,
- Fig. 3: einen Querschnitt durch die Anordnung aus Fig. 2 gemäß Schnittlinie III-III, wobei das Funktionselement komplett mit einer Funktionseinheit gezeigt ist und wobei mit der strichpunktierten Erweiterung in der linken Bildhälfte die Ausgestaltung eines Funktionselements angedeutet wird, das gleichzeitig in zwei Befestigungsnuten verankert wird, und
- Fig. 4: eine Untersicht des Funktionselements aus Fig. 3 mit Blickrichtung gemäß Pfeil IV, wobei strichpunktiert die Kontur des Halsbereiches der Befestigungsvertiefung des nicht dargestellten Tragteils angedeutet ist.

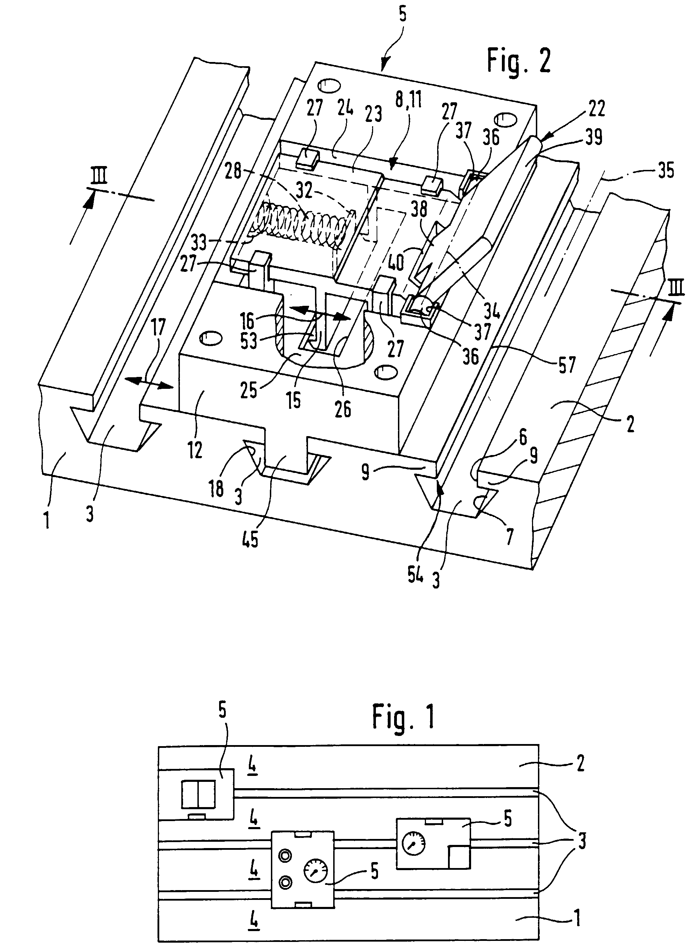

Aus Fig. 1 geht ein insbesondere plattenförmiges Tragteil 1 hervor. Es hat bevorzugt eine rechteckige Außenkontur. Eine der beiden großen Plattenflächen bildet eine Montagefläche 2, die in Draufsicht gezeigt ist. Das Tragteil verfügt über mehrere Befestigungsvertiefungen 3, die einen linearen Verlauf haben und in Parallelanordnung mit gleichem Abstand nebeneinander angeordnet sind. Sie sind von der Montagefläche 2 aus in das Tragteil 1 eingebracht und somit längsseits zur Montagefläche 2 hin offen. Die Befestigungsvertiefungen 3 münden an entgegengesetzten Stirnseiten des Tragteils 1 aus, was aus der vergrößerten Darstellung der Fig. 2 gut ersichtlich ist. Bei dem Tragteil 1 kann es sich um ein stranggepreßtes Profilteil handeln. Durch die Befestigungsvertiefungen 3 wird die Montagefläche 2 in mehrere nebeneinanderliegende Flächenabschnitte 4 unterteilt.

In Fig. 1 sind ferner mehrere Funktionselemente 5 dargestellt, die auf der Montagefläche 2 sitzen und in jeweils mindestens einer Befestigungsvertiefung 3verankert sind. Das mittlere Funktionselement 5 ist gleichzeitig in zwei Befestigungsvertiefungen 3 festgelegt, die übrigen Funktionselemente 5 sind jeweils nur in einer einzigen Befestigungsvertiefung 3 verankert.

Bei den Funktionselementen 5 handelt es sich um Komponenten einer beliebig aufzubauenden Anordnung von insbesondere pneumatischer und/oder hydraulischer und/oder elektrischer und/oder elektronischer und/oder optischer Art. Die einzelnen Funktionselemente 5 lassen sich beliebig unter Verwendung geeigneter Leitungen (nicht dargestellt) miteinander verknüpfen. Ihr Montageplatz auf der Montagefläche 2 ist beliebig wählbar, der Bestücker wählt den am günstigsten erscheinenden Montageplatz bedarfsgemäß aus. Die Funktionselemente 5 ermöglichen es insbesondere, eine in der Praxis zu installierende Einrichtung vorab zu Testzwecken aufzubauen, um die bestmögliche Verknüpfung zu ermitteln. Es liegt dann praktisch ein Modell vor, das die wirklichen Verhältnisse demonstriert. Daneben eignet sich die Anordnung vor allem für Schulungszwecke, indem sie erlaubt, komplizierte Zusammenhänge anschaulich wiederzugeben.

Entsprechend ihrer Funktion sind die einzelnen Funktionselemente 5 mit geeigneten Bauteilen bestückt. Hier kann es sich beispielsweise um Ventile, Arbeitszylinder, Manometer, elektronische Steuerungen, Anschlußstutzen für pneumatische und/oder hydraulische Leitungen handeln, wobei diese Aufzählung keinesfalls vollständig ist.

Wie man vor allem der Fig. 2 entnimmt, verfügen die Befestigungsvertiefungen 3 untereinander zweckmäßigerweise über die gleiche Gestaltung. Ausgehend von der Montagefläche 2 ist zunächst ein Halsabschnitt 6 vorgesehen, an den sich in Tiefenrichtung ein erweiterter Befestigungsabschnitt 7 anschließt. Auf diese Weise ergibt sich beidseits des Halsabschnittes 6 ein vom übergangsbereich zwischen dem Halsabschnitt 6 und dem Befestigungsabschnitt 7 gebildeter Haltevorsprung 9. Bei den Befestigungsvertiefungen 3 handelt es sich um eine Art T-Nuten.

Wie im einzelnen aus Fig. 2 bis 4 hervorgeht, verfügt das Funktionselement 5 über eine Befestigungseinrichtung 8, die dazu dient, das Funktionselement 5 lösbar an der Montagefläche 2 des Tragteils 1 festzulegen. Die Befestigungseinrichtung 8 ist als Klemmeinrichtung 11 ausgebildet, die eine schnelle Montage und Demontage ohne Zuhilfenahme zusätzlicher Werkzeuge allein auf Grund der menschlichen Hand ermöglicht. Das Funktionselement 5 ist also sehr bedienungsfreundlich.

Das beispielgemäße Funktionselement 5 hat einen modularen Aufbau. Es besitzt einen plattenähnlichen Grundkörper 12, an dem die Klemmeinrichtung 11 vorgesehen ist. In der an das Tragteil angesetzten Montagestellung des Funktionselements 5 sitzt der Grundkörper 12 mit seiner Unterseite auf der Montagefläche 2 auf. An der Oberseite des Grundkörpers 12 ist lösbar eine Funktionseinheit 13 angebracht. Diese beinhaltet eines oder mehrere der bereits erwähnten Bauelemente, unter deren Verwendung eine bestimmte Schaltung aufgebaut bzw. simuliert werden soll. Im Falle des Ausführungsbeispiels ist die Funktionseinheit 13 mit zwei Anschlußstutzen 14 für pneumatische Leitungen und einem Manometer ausgestattet, wobei lediglich einer der Anschlußstutzen 14 sichtbar ist und die anderen Teile oberhalb der Schnittebene liegen. Andere Funktionselemente 5 sind ebenfalls mit einem Grundkörper 12 der gezeigten Art ausgestattet, besitzen jedoch Funktionseinheiten 13 abweichenden Aufbaus. Indem man eine geeignete Auswahl von Funktionselementen 5 zur Verfügung stellt, kann man einen Baukasten vorgeben, mit dem insbesondere zu Lehrzwecken ein anschaulicher Unterricht durchgeführt werden kann.

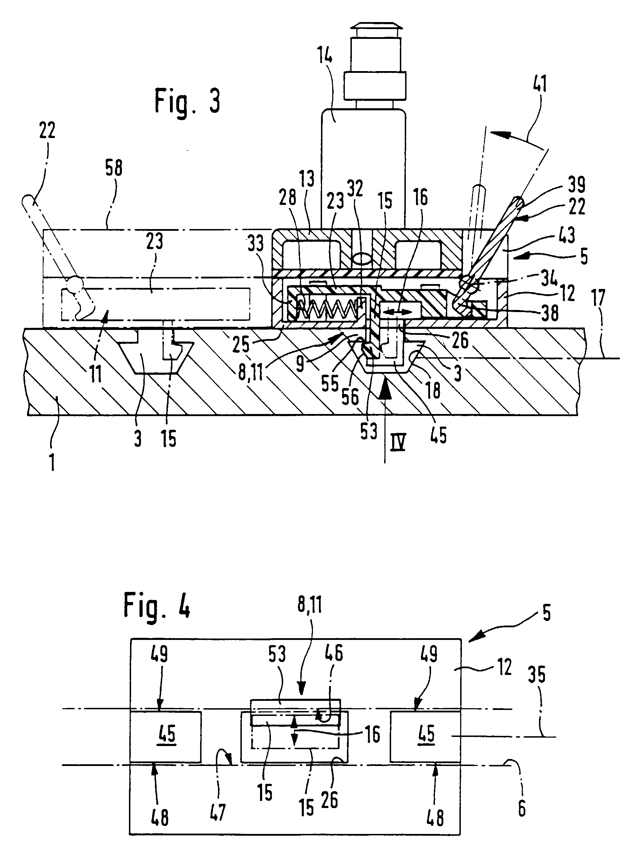

Im folgenden sei die Klemmeinrichtung 11 näher betrachtet. Diese besitzt ein Klemmteil 15, das an der Unterseite des Funktionselementes 5 vorspringt und somit beim Ausführungsbeispiel nach unten über die Grundfläche des Grundkörpers 12 vorsteht. Seine Länge ist so gewählt, daß es in der Montagestellung des Funktionselementes 5 von der Montagefläche 2 her in die zugeordnete Befestigungsvertiefung 3 eintaucht, ohne am Grund der Befestigungsvertiefung 3 aufzusitzen. Das Klemmteil 15 ist in Querrichtung des Grundkörpers 12 gemäß Doppelpfeil 16 hin und her verlagerbar, wobei diese Querrichtung 16 in der Montagestellung mit der parallel zur Montagefläche 2 verlaufenden Querrichtung 17 der Befestigungsvertiefung 3 zusammenfällt. Auf diese Weise läßt sich das Klemmteil 15 zwischen einer in Fig. 2 bis 4 in durchgezogenen Linien gezeigten Klemmstellung und einer in Fig. 3 und 4 strichpunktiert angedeuteten Lösestellung verlagern. In der Klemmstellung ist das Klemmteil 15 gegen die Vertiefungsoberfläche 18 der Befestigungsvertiefung 3 vorgespannt. Die Folge ist eine kraftschlüssige Verbindung, die dafür sorgt, daß das Funktionselement 5 am Tragteil 1 festgelegt ist und insbesondere auch nicht mehr ohne weiteres von der Montagefläche 2 des Tragteils 1 abgehoben werden kann. In der Lösestellung hingegen ist ein derartiges Abheben insbesondere in Richtung rechtwinkelig zur Montagefläche 2 möglich, da hier die Vorspannung zwischen dem Klemmteil 15 und der Vertiefungsoberfläche 18 erheblich verringert und vorzugsweise vollständig aufgehoben ist, indem das Klemmteil 15 mit Abstand von der Vertiefungsoberfläche 18 zu liegen kommt.

Das Verlagern des Klemmteils 15 aus der Klemmstellung in die Lösestellung wird durch manuelle und werkzeuglose Einflußnahme auf ein Betätigungselement 22 der Klemmeinrichtung 11 hervorgerufen. Dieses ragt beim Ausführungsbeispiel gut ergreifbar über die Außenkontur des Funktionselemente 5 vor.

Bei der gezeigten bevorzugten Ausführungsform ist das Klemmteil 15 Bestandteil eines Schiebers 23, mit dem es insbesondere einstückig ausgebildet ist. Der Schieber 23 besteht zweckmäßigerweise aus Kunststoffmaterial. Er ist in Querrichtung 16 verschieblich am Grundkörper 12 geführt. Wird er entsprechend bewegt, so wird das Klemmteil 15 mitbewegt. Ihm steht zumindest so viel Verlagerungsspiel zur Verfügung, daß das Klemmteil 15 sowohl die Klemmstellung als auch die Lösestellung einnehmen kann. Zweckmäßigerweise werden diese beiden Stellungen durch die beiden Endstellungen des Schiebers vorgegeben.

Der Schieber 23 kommt zweckmäßigerweise in einer Ausnehmung 24 des Grundkörpers 12 zu liegen, die beispielsgemäß zur darüber angeordneten Funktionseinheit 13 hin offen ist und von dieser abgedeckt wird. Nach unten hin wird die Ausnehmung 24 von einem Boden 25 des Grundkörpers 12 begrenzt, der eine Durchbrechung 26 aufweist, durch die das Klemmteil 15 hinausragt. Die Durchbrechung 26 ist mindestens so breit, daß das Klemmteil 15 den notwendigen Freiraum für die Querbewegung 16 besitzt.

Zu seiner Führung sitzt der Schieber 23 beim Ausführungsbeispiel einerseits auf dem Boden 25 verschieblich auf. Oben wird er von einem oder mehreren, insbesondere klauenähnlichen Führungselementen 27 zumindest ein Stück weit übergriffen, die am Grundkörper 12 befestigt und insbesondere einstückig angeformt sind. Auf diese Weise ist die Höhenlage des Schiebers 23 fixiert. Seinen Seitenhalt erhält der Schieber 23 durch Partien des Grundkörpers 12, die beispielsgemäß ebenfalls an den Führungselementen 27 vorgesehen sind. Diese sind dazuhin vorzugsweise als elastisch biegbare Rastelemente ausgebildet, die sich zur Montage und/ oder Demontage des Schiebers 23 quer zu dessen Längsrichtung vorübergehend ausbiegen lassen.

Vorzugsweise ist das Klemmteil 15 federnd in die Klemmstellung vorgespannt. Zu diesem Zweck arbeitet beim Ausführungsbeispiel eine Federanordnung 28 zwischen dem Schieber 23 und dem Grundkörper 12. Sie spannt den Schieber 23 in eine Ausgangsstellung vor, in der das Klemmteil 15 die Klemmstellung einnimmt. Zweckmäßig ist es, wenn die Federanordnung 28 in der Ausnehmung 24 im Bereich unterhalb des Schiebers 23 und oberhalb des Bodens 25 zu liegen kommt. Dadurch wird verhindert, daß die Federanordnung 28 bei einem Auswechseln der Funktionseinheit 13 versehentlich herausspringt. Die Federanordnung 28 kann sich einerseits an einer vom Boden 25 hochragenden Grundkörperwand 32 abstützen, die sich unmittelbar neben der Durchbrechung 26 befindet. Andererseits kann die Federanordnung 28 gegen eine nach unten ragende Schieberwand 33 arbeiten, die sich an einem der Endbereiche des Schiebers 23 auf derjenigen Seite der Durchbrechung 26 befindet, auf der auch die Grundkörperwand 32 liegt. Auf diese Weise wird das Klemmteil 15 in der Klemmstellung in Richtung desjenigen Längsrandes der Durchbrechung 26 gezogen, die der Grundkörperwand 32 benachbart ist. Die Federanordnung 28 ist mithin auf äußerst kompakte Weise untergebracht, wobei es sich um eine Druckfederanordnung handelt, die beispielsweise aus einer Schraubenfeder besteht.

Das Betätigungselement 22 könnte unmittelbarer Bestandteil des Schiebers 23 sein, wobei der Schieber 23 und das Betätigungselement 22 beim Verlagern zwischen der Klemmstellung und der Lösestellung eine identische Querbewegung 16 ausführen. Vorteilhafterist jedoch die gewählte Bauform, bei der das separate Betätigungselement 22 sich einerseits am Grundkörper 12 abstützt und andererseits mit dem Schieber 23 gekoppelt ist. Dies ermöglicht eine Ausgestaltung, bei der das Betätigungselement 22 mit Hebelübersetzung an dem Schieber 23 und damit an dem Klemmteil 15 angreift. Man kann hier unter Verwirklichung einer starken Federanordnung 28 große Klemmkräfte bezüglich des Klemmteils 15 verwirklichen und gleichwohl die bei der Handhabung des Betätigungselements 22 aufzubringenden Kräfte relativ gering halten, so daß keine weiteren Verstellhilfsmittel benötigt werden.

Im Falle des Ausführungsbeispiels ist das Betätigungselement 22 als Schwenkteil ausgebildet, das am Grundkörper 12 verschwenkbar gelagert ist. Die Lagerstelle befindet sich zweckmäßigerweise im Bereich des der Federanordnung 28 entgegengesetzten Schieberendes und insbesondere oberhalb desselben im Randbereich des Grundkörpers 12. Über eine Schwenkachse 34, die in Montagestellung gesehen parallel zur Längsrichtung 35 der Befestigungsvertiefungen 3 und somit rechtwinkelig zur Verschieberichtung 16 des Schiebers 23 verläuft, ist das Betätigungselement 22 verschwenkbar am Grundkörper 12 gelagert. Beispielsgemäß verfügt das Betätigungselement 22 an entgegengesetzten Seiten über jeweils einen Lagerstummel 36, der jeweils drehbar in einer Lagertasche 37 des Grundkörpers 12 einliegt und bei montierter Funktionseinheit von dieser überdeckt und am Herausfallen gehindert wird.

Das Betätigungselement 22 hat beim Ausführungsbeispiel eine Hebelfunktion. Es besitzt einen ersten kürzeren Hebelarm 38, der sich ausgehend von der Schwenkachse 34 vorzugsweise schräg nach unten in Richtung zum Schieber 23 erstreckt und mit diesem in Eingriff steht. Ein zweiter längerer Hebelarm 39 ragt ausgehend von der Schwenkachse 34 vom Schieber 23 insbesondere schräg nach oben weg, zweckmäßigerweise in entgegengesetzter Richtung wie der kürzere Hebelarm 38. Der Eingriff zwischen Betätigungselement 22 und Schieber 23 erfolgt vorzugsweise dadurch, daß der kürzere Hebelarm 38 mit seinem freien Ende in eine Ausnehmung 40 des Schiebers 23 eingreift.

In der Klemmstellung des Klemmteils 15 nimmt das Betätigungselement 22 die in Fig. 2 und 3 gezeigte Ausgangsstellung ein. Der zur manuellen Beaufschlagung zugängliche längere Hebelarm kann nun gemäß Pfeil 41 nach innen zum Schieber hin verschwenkt werden, wobei der kürzere Hebelarm 38 im Lösesinne auf den Schieber 23 einwirkt und diesen in die Lösestellung verlagert. Läßt man den längeren Hebelarm 39 wieder los, gelangt das Klemmteil 15 auf Grund der beaufschlagenden Federkraft selbsttätig in die Klemmstellung zurück, wobei auch das Betätigungselement 22 in die Ausgangsstellung zurückbewegt wird. Als vorteilhaft hinsichtlich der Betätigung hat es sich erwiesen, wenn der längere Hebelarm 39 in der Ausgangsstellung des Betätigungselements 22 bezüglich der Montagefläche 2 geneigt angeordnet ist und schräg nach oben ragt, so daß seine Längsachse mit der Montagefläche 2 an der dem Schieber 23 abgewandten Außenseite einen spitzen Winkel einschließt.

Es ist zweckmäßig, wenn die Funktionseinheit 13 im Bereich des Betätigungselementes 22 eine dessen Durchgriff und Schwenkbewegung erlaubende Aussparung 43 aufweist. Um eine schmale Bauweise zu verwirklichen, ragt das Betätigungselement 22 vorzugsweise im Bereich der Oberseite aus dem Grundkörper 12 hinaus, so daß dessen Seitenwände ringsum hochgezogen sein können.

Es wäre denkbar, mindestens zwei zwischen einer Klemmstellung und einer Lösestellung bewegliche Klemmteile am Funktionselement 5 vorzusehen, die in der Montagestellung in die gleiche Befestigungsvertiefung 3 eingreifen. Erheblich einfacher ist allerdings die beispielsgemäße Bauform, die zudem noch eine exakt reproduzierbare Positionierung des Funktionselements 5 bei jeder Montage ermöglicht.

Zusätzlich zu dem relativ zum Grundkörper 12 beweglichen Klemmteil 15 verfügt die Klemmeinrichtung 11 über mindestens ein ebenfalls nach unten über die Grundfläche des Grundkörpers 12 vorspringendes Abstützteil 45, das beispielsgemäß in einer Anzahl von zwei Stück vorgesehen ist. Das jeweilige Abstützteil 45 ist bezüglich des Grundkörpers 12 unbeweglich und insbesondere starr angeordnet, wobei eine einstückige Ausgestaltung zweckmäßig ist. In der Montagestellung ragen die Abstützteile 45 in die zugeordnete Befestigungsvertiefung 3 hinein, und indem das Klemmteil 15 in der Klemmstellung in Richtung der einen Vertiefungsflanke 46 vorgespannt wird, werden die Abstützteile 45 mit einer ersten Abstützfläche 48 gegen die gegenüberliegende Vertiefungsflanke 47 gedrückt, so daß eine Abstützung stattfindet.

Obwohl das Funktionselement 5 auf diese Weise in der Montagestellung bereits in exakter Ausrichtung festgelegt ist, ist es von Vorteil, wenn die Abstützteile 45 eine von der ersten Abstützfläche 48 abgewandte zweite Abstützfläche 49 aufweisen, die in der Montagestellung ebenfalls innerhalb der Befestigungsvertiefung 3 zu liegen kommen und dabei derjenigen Vertiefungsflanke 46 zugewandt sind, gegen die auch das Klemmteil 15 in der Klemmstellung arbeitet. Die Abstützteile 45 sind zweckmäßigerweise von Vorsprüngen des Grundkörpers 12 gebildet, und die Abstützflächen 48,49 befinden sich an in Querrichtung 16 einander entgegengesetzten Außenseiten des jeweiligen Abstützteils 45. Der in Querrichtung 16 gemessene Abstand der beiden Abstützflächen 48, 49 ist vorzugsweise so gewählt, daß die Abstützteile 45 in der Montagestellung zumindest annähernd spielfrei in der Befestigungsvertiefung 3 aufgenommen sind, so daß unabhängig von der Stellung des Klemmteils 15 eine Querabstützung des Funktionselements 5 bezüglich des Tragteils 1 in beiden Richtungen stattfindet.

Unter Umständen können die ersten und zweiten Abstützflächen 48, 49 an verschiedenen Abstützteilen 45 vorgesehen sein. Vorteilhaft ist ferner, wenn das Klemmteil 15 in Längsrichtung 35 beidseits von jeweils mindestens einem Abstützteil 45 flankiert wird. Die Abstützteile 45 können Zentrierelemente bilden, die auf Grund der vorhandenen Abstützflächen eine exakte Zentrierung des Funktionselements 5 bezüglich der zugeordneten Befestigungsvertiefung 3 bewirken.

Eine besonders sichere Verankerung des Funktionselements 5 in einer Befestigungsvertiefung 3 ergibt sich, wenn das Klemmteil 15 mindestens einen in Querrichtung 16 vorspringenden Verankerungsvorsprung 53 aufweist, der in der Klemmstellung bei in Montagestellung befindlichem Funktionselement 5 einen der Haltevorsprünge 9 der zugeordneten Befestigungsvertiefung 3 an der in Richtung des Vertiefungsgrundes weisenden Unterseite hintergreift. Es ist zweckmäßig, den Verankerungsvorsprung 53 rippenartig auszubilden, wobei er sich über die gesamte Länge des Klemmteils 15 erstreckt. Er befindet sich zweckmäßigerweise im Bereich des nach unten ragenden freien Endes des Klemmteils 15, mit dem er vorzugsweise einstückig ausgebildet ist. Indem er den Haltevorsprung 9 hintergreift, ist das Funktionselement 5 auch bei hohen Zugkräften gegen ein Abheben gesichert. Der Verankerungsvorsprung 53 ist beim Ausführungsbeispiel zudem so ausgebildet, daß er beim Zusammenwirken mit dem Haltevorsprung 9 eine in Richtung des Vertiefungsgrundes wirkende Zugkraft verursacht, die über den Schieber 23 auf den Grundkörper 12 übertragen wird, so daß das Funktionselement 5 zusätzlich gegen die Montagefläche 2 gepreßt wird. Erreicht wird dies dadurch, daß die nach oben zum Grundkörper 12 weisende Verankerungsfläche 55 des Verankerungsvorsprunges 53 bezüglich der Querrichtung 16 leicht geneigt ist und in Richtung zum seitlich angeordneten freien Ende des Verankerungsvorsprunges 53 leicht nach unten in Richtung des Vertiefungsgrundes abfällt. Die schräge Verankerungsfläche 55 arbeitet dann in der Klemmstellung gegen die übergangskante 54 zwischen dem Halsabschnitt 6 und dem Befestigungsabschnitt 7. Bevorzugt ist die Hintergreifstellung des Verankerungsvorsprunges 53 in der Lösestellung des Klemmteils 15 vollständig aufgehoben, so daß das Funktionselement 5 im rechten Winkel zur Montagefläche 2 abgehoben werden kann.

Zweckmäßig ist es, auch an der dem Nutgrund zugewandten Unterseite des Verankerungsvorsprunges 53 eine Schrägfläche vorzusehen, die als Einführfläche 56 wirkt. Sie läuft ausgehend vom dem Nutgrund zugewandten freien Ende des Klemmteils 15 in Richtung zum seitlichen freien Ende des Verankerungsvorsprunges 53 schräg nach oben außen. Beim Ansetzen des Funktionselementes 5 an das Tragteil 1 tritt die Einführfläche 56 in Kontakt mit der übergangskante 57 zwischen der Montagefläche 2 und dem Halsabschnitt 6, wodurch bewirkt wird, daß sich der Schieber 23 entgegen der Rückstellkraft der Federanordnung 28 in Richtung der Lösestellung bewegt, bis der Verankerungsvorsprung 53 durch den Halsabschnitt 6 hindurch in den Befestigungsabschnitt 7 einschnappbar ist. In diesem Falle braucht das Betätigungselement 22 zur Montage nicht gehandhabt zu werden, obwohl dies selbstverständlich möglich ist.

Es ist durchaus möglich, ein Funktionselement 5 mit mehreren Klemmeinrichtungen 11 der bisher beschriebenen Art auszustatten, die unabhängig voneinander arbeiten. Zweckmäßig ist dies, wenn infolge der Größe des Funktionselements 5 eine gleichzeitige Verankerung in mehreren Befestigungsvertiefung 3 sinnvoll ist. Eine entsprechende Ausgestaltung ist in Fig. 3 angedeutet, wobei das Funktionselement 5 zusätzlich zu dem in durchgezogenen Liniengezeigten Aufbau auch noch den strichpunktiert angedeuteten Aufbau 58 enthält. Zweckmäßig ist es hierbei, die Klemmteile 15 so anzuordnen, daß sie entweder beide gegen die voneinander abgewandten oder gegen die einander zugewandten Vertiefungsflanken der zugeordneten Befestigungsvertiefungen 3 arbeiten. Indem man beide Betätigungselemente 22 gleichzeitig mit einer Hand betätigt, läßt sich auch das erweiterte Funktionselement 5 bequem handhaben.

Insbesondere bei besonders langen Funktionselementen 5 kann auch vorgesehen sein, mehrere Klemmteile 15 in Längsrichtung 35 beabstandet aufeinanderfolgend vorzusehen, die an einem gemeinsamen oder an voneinander unabhängigen Schiebern 23 angeordnet sein können. Je nach Ausgestaltung ist dann eine einheitliche oder voneinander unabhängige Betätigung möglich.

## Patentansprüche

1. Für Demonstrations- und/oder Schulungszwecke verwendbares Funktionselement (5), das lösbar an der Montagefläche (2) eines mindestens eine nutartige Befestigungsvertiefung (3) aufweisenden Tragteils (1) festlegbar ist und zu diesem Zweck eine mit dem Tragteil (1) in Eingriff bringbare Klemmeinrichtung (11) aufweist, die über mindestens ein bei an das Tragteil (1) angesetzter Montagestellung in eine Befestigungsvertiefung (3) des Tragteils (1) eingreifendes Klemmteil (15) verfügt, das mittels eines Betätigungselements (22) der Klemmeinrichtung (11) manuell und werkzeuglos relativ zu einem Grundkörper (12) zwischen einer Klemmstellung und einer Lösestellung verlagerbar ist, wobei das Klemmteil (15) in seiner Klemmstellung, einem Abheben des in Montagestellung befindlichen Funktionselements (5) vom Tragteil (1) entgegenwirkend, in Querrichtung (16) der Befestigungsvertiefung (3) gegen deren Vertiefungsoberfläche vorgespannt ist und in seiner Lösestellung, ein Abheben des Funktionselements (5) ermöglichend, mit verringerter Vorspannung gegen die Vertiefungsoberfläche arbeitet oder von dieser entfernt ist, dadurch gekennzeichnet, daß das Klemmteil (15) Bestandteil eines an dem Grundkörper (12) verschieblich gelagerten Schiebers (23) ist, der mit dem Betätigungselement (22) gekoppelt ist, daß sich zwischen dem Schieber (23) und dem Grundkörper (12) eine Federanordnung (28) abstützt, die den Schieber (23) in Richtung der Klemmstellung des Klemmteils (15) vorspannt, und daß das Betätigungselement als bezüglich dem Grundkörper (12) verschwenkbar gelagertes, mit Hebelübersetzung an dem Schieber (23) angreifendes Schwenkteil ausgebildet ist.

2. Funktionselement nach Anspruch 1, dadurch gekennzeichnet, daß die Federanordnung (28) in einer Ausnehmung (24) des Grundkörpers (12) zwischen dem Schieber (23) und einem Boden (25) des Grundkörpers (12) aufgenommen ist.

3. Funktionselement nach Anspruch 1 oder 2, dadurch gekennzeichnet, daß das Betätigungselement (22) ein zweiarmiger Hebel ist, dessen kürzerer Hebelarm (38) mit dem Schieber (23) gekoppelt ist und dessen längerer Hebelarm (39) zur manuellen Beaufschlagung zugänglich ist.

4. Funktionselement nach Anspruch 3, dadurch gekennzeichnet, daß der längere Hebelarm (39) in der Klemmstellung bezüglich der Montagefläche (2) geneigt angeordnet ist und schräg nach oben ragt.

5. Funktionselement nach einem der Ansprüche 1 bis 4, dadurch gekennzeichnet, daß die Federanordnung (28) derart ausgelegt ist, daß die in der Klemmstellung zwischen dem Klemmteil (15) und dem Tragteil (1) vorliegende kraftschlüssige Verbindung bei einem gewissen Kraftaufwand ein Verschieben des Funktionselementes (5) längs der zugeordneten Befestigungsvertiefung (3) ermöglicht.

6. Funktionselement nach einem der Ansprüche 1 bis 5, dadurch gekennzeichnet, daß die Klemmeinrichtung (11) mindestens ein an der Unterseite des Grundkörpers (12) vorspringendes Abstützteil (45) aufweist, das in der Montagestellung mit einer seitwärts gerichteten Abstützfläche (48) in die gleiche Befestigungsvertiefung eintaucht wie das Klemmteil (15), wobei das Klemmteil (15) und die erste Abstütztfläche (48) vorgesehen sind, um in der Klemmstellung die Tragplatte (1) an in Querrichtung (16) der zugeordneten Befestigungsvertiefung (3) gegenüberliegenden Vertiefungsflanken (46,47) zu beaufschlagen.

7. Funktionselement nach Anspruch 6, dadurch gekennzeichnet, daß die Klemmeinrichtung (11) mindestens ein an der Unterseite des Funktionselements (5) vorspringendes Abstützteil (45) aufweist, das in der Montagestellung mit einer zweiten Abstützfläche (49) in die zugeordnete Befestigungsvertiefung (3) eintaucht, die derjenigen Vertiefungsflanke (46) zugewandt ist, die von dem in Klemmstellung befindlichen Klemmteil (15) beaufschlagt wird.

8. Funktionselement nach Anspruch 7, dadurch gekennzeichnet, daß die erste und zweite Abstützfläche (48,49) an einander entgegengesetzten Seiten eines gemeinsamen Abstützteils (45) vorgesehen sind.

9. Funktionselement nach einem der Ansprüche 6 bis 8, dadurch gekennzeichnet, daß das Klemmteil (15) axial zwischen zwei Abstützteilen (45) angeordnet ist.

10. Funktionselement nach einem der Ansprüche 1 bis 9, dadurch gekennzeichnet, daß das Klemmteil (15) zum Verbringen zwischen der Klemmstellung und der Lösestellung im wesentlichen paralell zur Montagefläche (2) in Querichtung (16) der Befestigungsvertiefung (3) verlagerbar ist.

11. Funktionselement nach einem der Ansprüche 1 bis 10, dadurch gekennzeichnet, daß das Klemmteil (15) einen Verankerungsvorsprung (53) aufweist, der in der Klemmstellung bei in Montagestellung befindlichem Funktionselement (5) einen Haltevorsprung (9) der Befestigungsvertiefung (3) hintergreift, der insbesondere vom Übergangsbereich zwischen einem schmäleren Halsabschnitt (6) und einem tiefer liegenden, breiteren Befestigungsabschnitt (7) der Befestigungsvertiefung (3) gebildet ist.

12. Funktionselement nach Anspruch 11, dadurch gekennzeichnet, daß der Verankerungsvorsprung (53) nasen- oder rippenähnlich ausgebildet ist.

13. Funktionselement nach einem der Ansprüche 1 bis 12, dadurch gekennzeichnet, daß der Grundkörper (12) eine zweckmäßigerweise auswechselbare Funktionseinheit (13) insbesondere pneumatischer und/oder hydraulischer und/oder elektrischer und/ oder eleketronischer und/oder optischer Art trägt.

14. Funktionselement nach einem der Ansprüche 1 bis 13, dadurch gekennzeichnet, daß mehrere einander gegenüber seitlich versetzte Klemmteile vorhanden sind, die bei Montagestellung in unterschiedliche Befestigungsvertiefungen (3) des Tragteils (1) eingreifen und denen zweckmäßigerweise jeweils ein eigenes Betätigungselement (22) zugeordnet ist.

## Claims

1. Functional element (5) for use in demonstration and/or training applications, which is detachably located on the mounting surface (2) of a supporting part (1) provided with at least one groove-type mounting recess (3) and which, for this purpose, is fitted with a clamping device (11) capable of engagement with the supporting part (1), said clamping device (11) having at least one clamping element (15) engaging a mounting recess (3) of the supporting part (1) in its mounting position on the supporting part (1) and being movable manually and without tools between a clamping position and a release position relative to a base body (12) by means of an operating element (22) of the clamping device (11), the clamping element (15) in its clamping position being biassed in the transverse direction (16) of the mounting recess (3) towards its recess surface to oppose the lifting of the mounted functional element (5) off the supporting part (1), while in its release position acting against the recess surface with reduced bias or being at a distance therefrom to enable the functional element (5) to be lifted off, characterized in that the clamping element (15) forms part of a slide (23) movably mounted on the base body (12) and connected to the operating element (22), in that a spring arrangement (28) biassing the slide (23) in the direction of the clamping position of the clamping element (15) is supported between the slide (23) and the base body (12), and in that the operating element is designed as a swivel part mounted to pivot relative to the base body (12) and acting on the slide (23) with leverage.

2. Functional element according to Claim 1, characterized in that the spring arrangement (28) is mounted in a recess (24) of the base body (12) between the slide (23) and a floor (25) of the base body (12).

3. Functional element according to Claim 1 or 2, characterized in that the operating element (22) is a two-armed lever, the shorter lever arm (38) being linked to the slide and the longer lever arm (39) being accessible for manual operation.

4. Functional element according to Claim 3, characterized in that the longer lever arm (39) is inclined relative to the mounting surface (2) in the clamping position, extending upwards at an angle.

5. Functional element according to any of Claims 1 to 4, characterized in that the spring arrangement (28) is so designed that the non-positive connection existing between the clamping element (15) and the supporting part (1) in the clamping position permits the functional element (5) to be moved along the associated mounting recess (3) at a certain expenditure of force.

6. Functional element according to any of Claims 1 to 5, characterized in that the clamping device (11) has at least one supporting part (45) projecting from the underside of the base body (12) and engaging the same mounting recess as the clamping element (15) with a lateral supporting surface (48) in the mounting position, the clamping element (15) and the first supporting surface (48) being provided in order to act in the clamping position upon the supporting plate (1) at the recess sides (46, 47) lying opposite each other in the transverse direction (16) of the associated mounting recess (3).

7. Functional element according to Claim 6, characterized in that the clamping device (11) has at least one supporting part (45) projecting from the underside of the functional element (5) and engaging the associated mounting recess (3) with a second supporting surface (49) in the mounting position, this being adjacent to the recess side (46) upon which the clamping element (15) acts in its clamping position.

8. Functional element according to Claim 7, characterized in that the first and second supporting surfaces (46, 47) are provided on opposite sides of a common supporting part (45).

9. Functional element according to any of Claims 6 to 8, characterized in that the clamping element (15) is located axially between two supporting parts (45).

10. Functional element according to any of Claims 1 to 9, characterized in that the clamping element (15) is movable substantially parallel to the mounting surface (2) in the transverse direction (16) of the mounting recess (3) for switching between the clamping position and the release position.

11. Functional element according to any of Claims 1 to 10, characterized in that the clamping element (15) has an anchorage projection (53) which, in the clamping position when the functional element (5) is mounted, engages behind a retaining projection (9) of the mounting recess (3), this being in particular represented by the transition area between a narrower neck section (6) and a wider and lower-lying mounting section (7) of the mounting recess (3).

12. Functional element according to Claim 11, characterized in that the anchorage projection (53) has a nose- or rib-like shape.

13. Functional element according to any of Claims 1 to 12, characterized in that the base body (12) carries an expediently exchangeable functional unit (13), in particular of a pneumatic and/or hydraulic and/or electrical and/or electronic and/or optical kind.

14. Functional element according to any of Claims 1 to 13, characterized in that several clamping elements laterally offset relative to each other are provided to engage different mounting recesses (3) of the supporting part (1) in the mounting position, each expediently being assigned its own operating element (22).

## Revendications

1. Elément fonctionnel (5) utilisable à des fins de démonstration et/ou de formation, amovible (qui peut être monté et démonté) sur une plaque de montage (2) d'un support (1) présentant au moins une rainure de fixation (3), et comporte à cet effet un dispositif de serrage (11) à emboîter dans le support (1), lequel dispositif de serrage dispose d'une pièce de blocage (15) qui s'engage dans une rainure de fixation de la pièce support, lorsqu'une position de montage est déterminée, laquelle pièce de blocage est dépaçable grâce à un élément d'actionnement (22) du dispositif de serrage (11), manuellement et sans outils, entre une position de blocage et une position de déblocage, où la pièce de blocage (15), en position bloquée, produisant un effet contraire lors de la montée de l'élément fonctionnel (5), par rapport à la pièce support (1) se trouvant en position de montage, est mise en tension dans le sens perpendiculaire (16) à la rainure de fixation (3), contre sa surface supérieure et, la pièce de serrage (15) en position de déblocage, rendant possible l'extraction de l'élément fonctionnel (5), travaille avec une tension réduite contre la surface supérieure, ou bien est éloignée de celle-ci, **caractérisé en ce que** la pièce de blocage (15) est un composant d'un poussoir (23) positionné de manière mobile sur le corps de base (12), lequel poussoir (23) est couplé avec l'élément d'actionnement (22), en ce qu'entre le poussoir (23) et le corps de base (12) est disposé un système à ressort (28), qui contraint le poussoir (23) en direction de la position de serrage de la pièce de blocage (15), et en ce que l'élément d'actionnement (22) est conformée comme une pièce pivotante, montée pivotante relativement au corps de base (12) et agissant sur le poussoir (23) par l'intermédiaire d'une transmission à levier.

2. Elément fonctionnel selon la revendication 1, caractérisé en ce que le système à ressort (28) est logé dans un évidement (24) du corps de base (12), entre le poussoir (23) et un fond (25) du corps de base (12).

3. Elément fonctionnel selon la revendication 1 ou 2, caractérisé en ce que l'élément d'actionnement 22 est un levier à deux bras, dont le bras le plus court (38) est couplé avec le poussoir (23), et dont le bras le plus long (39) est accessible pour être actionné manuellement.

4. Elément fonctionnel selon la revendication 3, caractérisé en ce que le bras de levier le plus long (39), en position de serrage par rapport à la surface de montage (2), est diposé de manière inclinée et oblique vers le haut.

5. Elément fonctionnel selon l'une des revendications 1 à 4, caractérisé en ce que le système à ressort (28) est disposé de façon à ce que, en position de serrage, entre la pièce de blocage (15) et la pièce support (1) la liaison par adhérence, rend possible, en exerçant une certaine force entre la pièce de serrage et le support, le déplacement de l'élément fonctionnel (5) le long de la rainure (3) correspondante.

6. Elément fonctionnel selon l'une des revendications 1 à 5, caractérisé en ce que le dispositif de serrage (11) présente au moins une pièce d'appui (45) faisant saillie de la face inférieure du corps de base (12), laquelle pièce support (45) pénètre dans la même rainure de fixation que la pièce de blocage (15), en position de montage, par l'intermédiaire d'une surface d'appui (48) tournée latéralement, la pièce de blocage (15) et la première surface d'appui (48) sont prévues pour actionner, en position de serrage, la plaque support (1) dans le sens (16) perpendiculaire à la rainure de fixation vers les flancs (46, 47) opposés.

7. Elément fonctionnel selon la revendication 6, caractérisé en ce que le dispositif de serrage (11) présente au moins, une pièce d'appui (45) faisant saillie de la face inférieure de l'élément fonctionnel (5) et qui pénètre, en position de montage avec une deuxième surface d'appui (49), dans la rainure de fixation (3) correspondante, laquelle rainure de fixation est tournée vers le flanc de rainure (46), qui est contraint par la pièce de blocage (15) en position de blocage.

8. Elément fonctionnel selon la revendication 7, caractérisé en ce que la première et la seconde surface d'appui (48,49) sont prévues sur les côtés opposés d'une pièce d'appui commune (45).

9. Elément fonctionnel selon l'une des revendications 6 à 8, caractérisé en ce que la pièce de blocage (15) est montée axialement entre les deux pièces d'appui (45).

10. Elément fonctionnel selon l'une des revendications 1 à 9, caractérisé en ce que la pièce de blocage (15) est déplaçable entre les positions de bloquage et de déblocage, avec un trajet essentiellement parallèle à la surface de montage (2) et en direction (16) perpendiculaire à la rainure de fixation (3).

11. Elément fonctionnel selon l'une des revendications 1 à 10, caractérisé en ce que la pièce de blocage (15) présente un crochet d'ancrage (53) qui, en position de blocage est engagé derrière une saillie de retenue (9) de la rainure de fixation (3), en position de montage de l'élément fonctionnel (5), cette saillie (9) étant formée par la zone de transition entre un tronçon étroit en forme de col (6) et un tronçon de fixation (7) plus large et situé plus profondément, de la rainure de fixation (3).

12. Elément fonctionnel selon la revendication 11, caractérisé en ce que le crochet d'ancrage (53) possède une forme de nez ou de nervure.

13. Elément fonctionnel selon l'une des revendications 1 à 12, caractérisé en ce que le corps de base (12) porte une unité fonctionnelle (13) interchangeable de façon appropriée, en particulier de type pneumatique et/ou hydraulique et/ou électrique et/ou électronique et/ou optique.

14. Elément fonctionnel selon l'une des revendications 1 à 13, caractérisé en ce qu'il existe plusieurs pièces de serrage décalées latéralement les unes par rapport aux autres qui, en position de montage pénètrent dans différentes rainures de fixation (3) de la pièce support (1) et à chacune desquelles pièces de serrage est attribué son propre élément d'actionnement (22).
